# EUROPÄISCHE PATENTSCHRIFT

(11) **EP 4 172 483 B1**
(45) Veröffentlichungstag und Bekanntmachung des Hinweises auf die Patenterteilung: **17.12.2025**
(21) Anmeldenummer: 21735676.5
(22) Anmeldetag: 23.06.2021
(51) Int. Cl.: F02M 21/02, F02M 51/06, F02M 61/08, F02M 61/16, F02M 61/20, F02M 63/00, F16K 31/06, F16K 47/00, H01F 7/16

(54) **MAGNETVENTIL**
MAGNET VALVE
VANNE MAGNÉTIQUE

(30) Priorität: 24.06.2020 AT 505332020
(43) Veröffentlichungstag der Anmeldung: 03.05.2023
(73) Patentinhaber: Hoerbiger Wien GmbH, 1220 Wien (AT)
(72) Erfinder: WALDNER, Lukas, 1020 Wien (AT); HORVATH, Josef, 7304 Nebersdorf (AT)
(74) Vertreter: Patentanwälte Pinter & Weiss OG
(86) Internationale Anmeldenummer: PCT/EP2021/067165
(87) Internationale Veröffentlichungsnummer: WO 2021/260014

(56) Entgegenhaltungen:
- EP-A1- 3 267 028
- WO-A2-01/44654
- WO-A2-01/44654
- DE-A1- 102011 087 895
- DE-A1- 102011 087 895
- DE-A1- 102019 210 614
- DE-A1- 102019 210 614
- DE-A1- 19 638 025
- DE-T2- 69 006 934
- US-A1- 2019 010 906
- US-A1- 2019 010 906
- US-B2- 10 378 497
- US-B2- 10 378 497

## Beschreibung

Die Erfindung betrifft ein Magnetventil mit einem Ventilgehäuse, in dem eine elektrische Spule und ein Magnetanker angeordnet sind und mit einem vom Magnetanker in einer axialen Betätigungsrichtung betätigbaren Ventilelement zum Öffnen und Schließen des Magnetventils, wobei am Ventilgehäuse eine Ventilöffnung vorgesehen ist und wobei das Ventilelement die Ventilöffnung von außerhalb des Ventilgehäuses verschließt, wobei der Magnetanker einen Ankerschaft aufweist und das Ventilelement einen vom Ankerschaft getrennten Ventilschaft aufweist, wobei bei Betätigung des Magnetventils der Magnetanker über den Ankerschaft den Ventilschaft des Ventilelements betätigt, um die Ventilöffnung freizugeben und wobei beim Schließen des Magnetventils eine Bewegung des Magnetankers von einer Bewegung des Ventilelements entkoppelt ist, wobei das Ventilgehäuse im Bereich des Magnetankers einen Zylinder ausbildet und der Magnetanker einen Kolben ausbildet, der im Zylinder axial beweglich ist, wobei in Betätigungsrichtung zwischen einer, der Spule abgewandten ersten Ankerstirnfläche des Magnetankers und einer gegenüberliegenden Ventilgehäusewand ein Kompressionsraum ausgebildet ist, wobei im Magnetanker zumindest eine Drosselöffnung angeordnet ist, welche die erste Ankerstirnfläche mit einer gegenüberliegenden zweiten Ankerstirnfläche verbindet. Die Erfindung betrifft weiters einen Verbrennungsmotor.

Bei Verbrennungsmotoren werden oftmals elektromagnetisch betätigbare Einspritz- bzw. Einblaseventile verwendet, um flüssige oder gasförmige Kraftstoffe einem Brennraum zuzuführen. Solche Ventile werden üblicherweise als Magnetventile bezeichnet. Magnetventile haben gegenüber herkömmlichen mechanisch betätigten Ventilen den Vorteil, dass unabhängig von der Drehzahl des Verbrennungsmotors eine sehr flexible Ventilsteuerung realisiert werden kann. Beispielsweise kann damit der Öffnungszeitpunkt, die Öffnungsdauer und der Ventilhub variabel gesteuert werden, wodurch die Freiheitsgrade bei der Zumessung des Kraftstoffs erhöht werden. Bei Großmotoren, insbesondere großen Gasmotoren wird häufig ein Vorkammer-Prinzip verwendet, bei dem der gasförmige Kraftstoff nicht direkt dem Brennraum zugeführt wird, sondern einer, dem Brennraum vorgelagerten Vorkammer. Das brennbare Gas-/Luft-Gemisch wird dann in der Vorkammer gezündet, was in der Regel mittels Zündkerzen und/oder durch Kompression erfolgt. Ausgehend von der Vorkammer breitet sich die Verbrennung in den damit verbundenen Brennraum aus. An einer, im montierten Zustand dem Brennraum oder der Vorkammer zugewandten Seite des Magnetventils ist üblicherweise zumindest eine Ventilöffnung am Ventilgehäuse vorgesehen, welche durch ein Ventilelement verschlossen ist. Durch entsprechende Ansteuerung des Magnetventils wird die Ventilöffnung in gewünschter Weise freigegeben und verschlossen, um eine bestimmte Menge an Kraftstoff in den Brennraum oder die Vorkammer einzubringen.

Solche Magnetventile weisen in der Regel ein Ventilgehäuse auf, in dem eine elektrische Spule angeordnet ist, welche mit Energie versorgt werden kann, um ein Magnetfeld zu erzeugen. Weiters ist ein beweglicher Magnetanker vorgesehen, der durch das erzeugte Magnetfeld meist in axialer Richtung des Magnetventils bewegbar ist. Das Ventilelement ist meist mit dem Magnetanker verbunden und wird vom Magnetanker betätigt. Wird das Magnetventil durch Anlegen einer Spannung an die elektrische Spule betätigt, werden der Magnetanker und das damit verbundene Ventilelement bewegt und die Ventilöffnung wird freigegeben, um den Kraftstoff in den Brennraum oder die Vorkammer einzuspritzen bzw. einzublasen. Der Kraftstoff ist dazu in der Regel auf einen bestimmten Druck vorkomprimiert und wird dem Magnetventil über eine geeignete Zuführöffnung zugeführt. Meistens ist auch eine Rückstellfeder im Magnetventil vorgesehen, gegen welche der Magnetanker bewegt wird und welche nach Betätigen des Magnetventils dafür sorgt, dass die Ventilöffnung auch bei Ausfall der Energieversorgung wieder geschlossen wird.

Im Betrieb des Magnetventils unterliegen das üblicherweise metallische Ventilelement sowie der üblicherweise metallische Ventilsitz, an dem das Ventilelement im geschlossenen Zustand anliegt einem natürlichen Verschleiß an der Kontaktfläche. Dieser Verschleiß ist durch das häufige Anschlagen des Ventilelements am Ventilsitz bei jeder Schließbewegung bedingt. Je größer die Rückstellkräfte der Rückstellfeder und je höher die bewegten Massen des Magnetventils sind, desto höher ist in der Regel auch der Verschleiß des Ventilelements und des Ventilsitzes. Durch die Wahl von geeigneten, vorzugsweise metallischen

Werkstoffen für das Ventilelement und den Ventilsitz und/oder durch Wärmebehandlung der metallischen Werkstoffe konnte der Verschleiß bisher nur in unzureichendem Maß reduziert werden. In US 10,378,497 B2 wird vorgeschlagen die Masse des Magnetankers von der Masse des Ventilelements zu entkoppelt, wenn das Ventilelement während des Schließvorgangs am Ventilsitz anschlägt.

Es ist deshalb eine Aufgabe der Erfindung, den Verschleiß am Ventilelement und/oder am Ventilsitz eines Magnetventil in möglichst einfacher Weise zu reduzieren.

Die Aufgabe wird erfindungsgemäß dadurch gelöst, dass zwischen Ankerschaft und Ventilschaft ein Pufferelement aus Kunststoff angeordnet ist. Dadurch wir ein direkter Kontakt zwischen Ankerschaft und Ventilschaft vermieden, wodurch die Geräuschentwicklung sowie der Verschleiß reduziert werden können.

Um die Reibungsverluste des Magnetventils zu verringern ist es vorteilhaft, wenn das Pufferelement aus einem tribologisch optimierten Kunststoff ausgebildet ist, vorzugsweise aus einem Polytetrafluorethylen (PTFE) enthaltenden Kunststoff.

Vorzugsweise ist die Spule an einem Spulenträger angeordnet ist, wobei ein dem Magnetanker axial zugewandter Endabschnitt des Spulenträgers als Endanschlag für den Magnetanker ausgebildet ist, um eine axiale Bewegung des Magnetankers zu begrenzen, um einen Ventilhub des Ventilelements zu begrenzen. Vorzugsweise ist der Spulenträger dabei aus einem Kunststoff ausgebildet und die Spule ist vollständig im Spulenträger integriert. Dadurch wird eine einfache Möglichkeit geschaffen, den Ventilhub zu begrenzen, ohne dass separate Bauteile nötig sind.

Vorzugsweise erzeugt die Spule bei Betätigung des Magnetventils einen magnetischen Fluss, der über eine magnetisch leitfähige Ventilgehäuseaußenwand des Ventilgehäuses zum Magnetanker fließt, wobei im Ventilgehäuse ein magnetisch leitfähiges Flusselement vorgesehen ist, das zumindest einen Teil des über die Ventilgehäuseaußenwand fließenden magnetischen Flusses in eine der Spule zugewandte Ankerstirnfläche des Magnetankers einleitet. Dadurch können die auf den Magnetanker wirkenden Querkräfte verringert werden, sodass Reibungsverluste des Magnetventils verringert werden können.

Um den magnetischen Fluss in vorteilhafter Weise in den Magnetanker zu leiten ist das Flusselement vorzugsweise quer zur Betätigungsrichtung in einem an die Ventilgehäuseaußenwand des Ventilgehäuses angrenzenden Bereich angeordnet und in Betätigungsrichtung zwischen der Spule und dem Magnetanker. Wenn der Spulenträger als Ankeranschlag dient, ist das Flusselement vorzugsweise quer zur Betätigungsrichtung zwischen der Ventilgehäuseaußenwand und dem Endabschnitt des Spulenträgers.

Das Flusselement ist vorzugsweise als Flussring ausgebildet, besonders bevorzugt als geschlossener Flussring. Damit kann der magnetische Fluss an jeder Stelle in Umfangsrichtung in vorteilhafter Weise in den Magnetanker eingeleitet werden. Zudem ist ein Flussring einfach herstellbar.

Vorzugsweise weist das Flusselement eine höhere magnetische Leitfähigkeit auf, als die Ventilgehäuseaußenwand, sodass der magnetische Widerstand verringert wird und ein möglichst großer Anteil des magnetischen Flusses in die Stirnfläche des Magnetankers geleitet werden kann.

Als besonders vorteilhaft hat sich erwiesen, wenn das Flusselement einen Querschnitt in Form eines Trapezes, vorzugsweise eines rechtwinkeligen Trapezes aufweist, weil damit eine große Kontaktfläche mit der Ventilgehäuseaußenwand gebildet werden kann.

Vorzugsweise ist an der Umfangsfläche des Magnetankers ein Dichtelement zur Abdichtung des Kompressionsraums angeordnet, um die Wirkung des Dämpfers zu verbessern.

Vorzugsweise ist eine Ventilöffnung an einem axialen Ende des Ventilgehäuses vorgesehen und am Ventilgehäuse ist zumindest eine Zuführöffnung für ein vorzugsweise gasförmiges Medium vorgesehen, die innerhalb des Ventilgehäuses mit der Ventilöffnung verbunden ist. Dadurch kann das Magnetventil in vorteilhafter Weise als Gaseinblaseventil für einen Verbrennungsmotor verwendet werden.

Vorzugsweise ist im Ventilgehäuse ein Federelement angeordnet, das eine Rückstellkraft auf das Ventilelement ausübt, um das Ventilelement im unbetätigten Zustand des Magnetventils in der Schließstellung zu halten. Dadurch wird gewährleistet, dass das Ventil jedenfalls geschlossen ist, sobald die Energieversorgung der Spule unterbrochen ist.

In einer bevorzugten Ausführungsform ist im Ventilgehäuse ein Lenkerelement zur Führung des Magnetankers vorgesehen und/oder es ist ein Lenkerelement zur Führung des Ventilelements vorgesehen. Dadurch können der Magnetanker und/oder das Ventilelement in Querrichtung stabilisiert werden, sodass eine verbesserte Führung des Magnetankers und/oder des Ventilelements in Öffnungsrichtung gewährleistet werden kann. Das Lenkerelement zur Führung des Magnetankers ist dabei vorzugsweise an einer der Spule abgewandten Seite des Magnetankers zwischen dem Magnetanker und einer gegenüberliegenden Ventilgehäusewand im Ventilgehäuse angeordnet.

Zumindest ein Lenkerelement ist vorzugsweise als Federscheibe ausgebildet, die an ihrem Umfang am Ventilgehäuse befestigt ist und die einen zentralen Führungsabschnitt zur Führung des Magnetankers oder des Ventilelements aufweist. Dadurch kann eine konstruktiv einfache und damit kostengünstige Führung erreicht werden.

Vorzugsweise weist die Federscheibe einen, die Federscheibe in radialer Richtung begrenzenden, kreisringförmigen Befestigungsabschnitt zur Befestigung der Federscheibe am Ventilgehäuse auf und der zentrale Führungsabschnitt ist mit zumindest zwei Verbindungsstegen mit dem Befestigungsabschnitt verbunden, wobei die Verbindungsstege vorzugsweise in radialer Richtung gegenüberlegend angeordnet sind. Dabei ist es besonders vorteilhaft, wenn ein erster Verbindungspunkt jeweils eines Verbindungsstegs, an dem der Verbindungssteg mit dem zentralen Führungsabschnitt verbunden ist und ein zweiter Verbindungspunkt, an dem der Verbindungssteg mit dem Befestigungsabschnitt verbunden ist, in Umfangsrichtung gesehen voneinander beabstandet angeordnet sind, vorzugsweise in einem Winkel von zumindest 30°. Die konstruktive Ausführung der federscheibe hat sich als besonders geeignet für die Verwendung im Magnetventil erwiesen.

Die Aufgabe wird weiters mit einem Verbrennungsmotor mit einem Zylinderkopf und mit zumindest einem Brennraum dadurch gelöst, dass am Zylinderkopf zumindest ein Magnetventil gemäß der Erfindung angeordnet ist, um dem Brennraum oder einer, dem Brennraum vorgelagerten Vorkammer einen vorzugsweisen gasförmigen Kraftstoff zuzuführen.

Die gegenständliche Erfindung wird nachfolgend unter Bezugnahme auf die Figuren 1-3 näher erläutert, die beispielhaft, schematisch und nicht einschränkend eine vorteilhafte Ausgestaltung der Erfindung zeigt. Dabei zeigt
Fig.1 eine Schnittdarstellung eines Magnetventils in einer bevorzugten Ausführungsform,
Fig.2 eine Schnittdarstellung eines Magnetventils in einer alternativen Ausführungsform,
Fig.3 eine Draufsicht auf ein Lenkerelement in einer bevorzugten Ausführungsform.

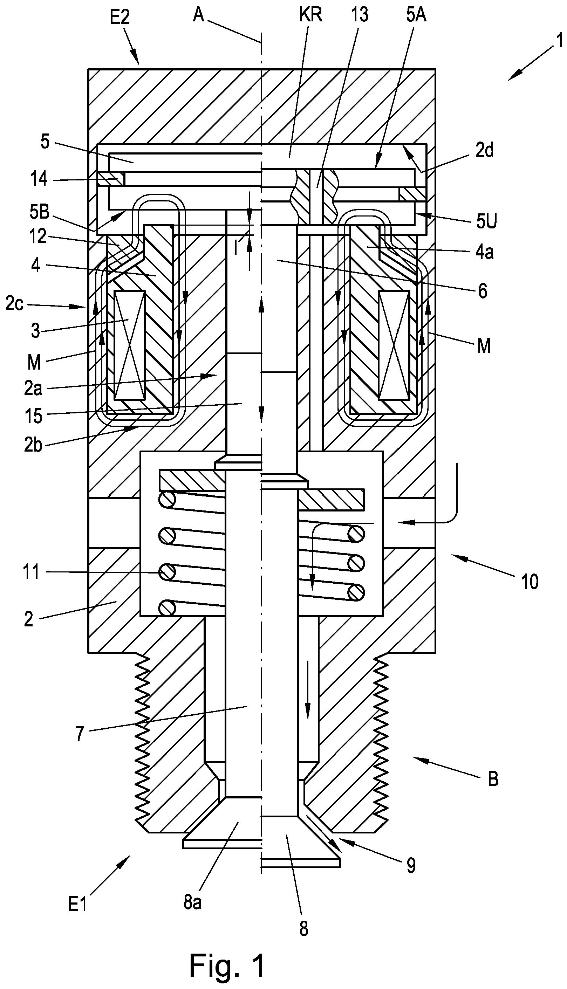

In Fig.1 ist eine vorteilhafte Ausgestaltung des erfindungsgemäßen Magnetventils 1 dargestellt. Das dargestellte Magnetventil 1 ist als trockenlaufendes Magnetventil 1 ausgebildet, das vorgesehen ist, einen gasförmigen Kraftstoff in den Brennraum oder eine, dem Brennraum vorgelagerte Vorkammer eines (nicht dargestellten) Verbrennungsmotors einzublasen. Das Magnetventil 1 weist ein Ventilgehäuse 2 auf, das hier im Wesentlichen zylinderförmig ausgeführt ist und eine Ventilachse A aufweist. Links der Ventilachse A ist das Magnetventil 1 in geschlossenem Zustand dargestellt, rechts der Ventilachse A in geöffnetem Zustand. An einem ersten axialen Ende E1 des Ventilgehäuses 2 ist ein Befestigungsabschnitt B vorgesehen, hier in Form eines Gewindes, mit dem das Magnetventil 1 an einem nicht dargestellten Zylinderkopf eines Verbrennungsmotors befestigt werden kann. Natürlich wären auch andere Arten der Befestigung möglich.

Im Ventilgehäuse 2 ist eine elektrische Spule 3 vorgesehen, die ringförmig um die zentrale Ventilachse A herum verläuft. Die Spule 3 kann über geeignete (nicht dargestellte) elektrische Anschlüsse mit Energie in Form einer elektrischen Spannung oder eines elektrischen Stroms versorgt werden, um in bekannter Weise ein (elektro-)magnetisches Feld zu erzeugen. Die Anschlüsse können je nach konstruktiver Ausgestaltung des Magnetventils 1 beispielsweise radial außen am Ventilgehäuse 2 vorgesehen sein oder an einem, dem ersten axialen Ende E1 gegenüberliegenden zweiten axialen Ende E2 des Ventilgehäuses 2. Die Spule 3 muss aber nicht einteilig ausgeführt sein, sondern es könnten auch mehrere Spulensegmente rund um die Ventilachse A verteilt angeordnet sein, die elektrisch verbunden sind. Die Spule 3 ist vorzugsweise an einem Spulenträger 4 angeordnet, der hier im Wesentlichen analog zur Spule 3 ringförmig ausgestaltet ist und in einer dafür vorgesehenen ringförmigen Öffnung im Ventilgehäuse 2 angeordnet ist. Der Spulenträger 4 ist vorzugsweise magnetisch nicht leitfähig. Im Wesentlichen bedeutet das, dass dessen magnetische Leitfähigkeit gegenüber den anderen den magnetischen Kreis M ausbildenden Teile vernachlässigbar gering ist. Die Spule 3 und der Spulenträger 4 bilden vorzugsweise einen gemeinsamen Bauteil aus. Die Spule 3 ist hier gänzlich im Spulenträger 4 integriert, also allseitig vom Spulenträger 4 umgeben, lediglich die nicht dargestellten elektrischen Anschlüsse der Spule 3 sind aus dem Spulenträger 4 in geeigneter Weise hinausgeführt. Der Spulenträger 4 kann z.B. aus einem geeigneten Kunststoff ausgebildet sein, mit dem die Spule 3 beispielsweise umgossen wird.

Im Ventilgehäuse 2 ist weiters ein Magnetanker 5 angeordnet, der in einer axialen Betätigungsrichtung in Richtung der Ventilachse A beweglich ist. Der Magnetanker 5 wirkt zur Betätigung des Ventils magnetisch mit der Spule 3 zusammen und weist hierfür eine der Spule 3 zugewandte Ankerstirnfläche 5A auf. Im dargestellten Beispiel ist der Magnetanker 5 im Wesentlichen zylinderförmig ausgeführt, mit einer der Spule 3 abgewandten axialen ersten Ankerstirnfläche 5A und einer gegenüberliegenden, der Spule 3 zugewandten zweiten Ankerstirnfläche 5B sowie mit einer Ankerumfangsfläche 5U. Am Magnetanker 5, beispielsweise an der zweiten Ankerstirnfläche 5B im gezeigten Beispiel, ist ein zentraler zylindrischer Ankerschaft 6 angeordnet, der innerhalb einer zylindrischen Öffnung des Ventilgehäuses 2 axial geführt ist und der in axialer Richtung synchron mit dem Magnetanker 5 beweglich ist. Der Ankerschaft 6 kann einteilig mit dem Magnetanker 5 ausgebildet sein oder in anderer geeigneter Weise mit dem Magnetanker 5 verbunden sein.

Am Ventilgehäuse 2 des Magnetventils 1 ist weiters eine Ventilöffnung 9 angeordnet, hier am ersten axialen Ende E1 des Ventilgehäuses 2. Die Ventilöffnung 9 kann mittels eines Ventilelements 8 geöffnet und geschlossen werden, das vom Magnetanker 5 betätigbar ist. Das Ventilelement 8 ist hier mit einem im Wesentlichen zylinderförmigen Ventilschaft 7 verbunden, der sich entlang der Ventilachse A im inneren des Ventilgehäuses 2 erstreckt. Der Ankerschaft 6 und der Ventilschaft 7 waren bisher starr miteinander verbunden, beispielsweise einteilig ausgeführt. Dadurch sind die Massen des Magnetankers 5 und des Ankerschaftes 6 immer an den Ventilschaft 7 und folglich an das Ventilelement 8 gekoppelt. Das führte bisher zu einem erhöhten Verschleiß am Ventilelement 8 und/oder am Ventilsitz, was nachteilig ist.

Erfindungsgemäß sind der Ankerschaft 6 und der Ventilschaft 7 daher voneinander getrennt ausgebildet, sodass die Bewegung des Ankerschaftes 6 von der Bewegung des Ventilschaftes 7 entkoppelt werden kann, wie nachfolgend noch näher erläutert wird. Im dargestellten Magnetventil 1 ist auch ein Federelement 11 innerhalb des Ventilgehäuses 2 angeordnet, das eine Rückstellkraft auf den Ventilschaft 7 und das damit verbundene Ventilelement 8 ausübt, sodass das Ventilelement 8 im unbetätigten Zustand des Magnetventils 1 in die Schließstellung (in Fig.1 links der Ventilachse A) zurückkehrt, um die Ventilöffnung 8 zu verschließen.

Zur Betätigung des Magnetventils 1 wird ein elektrischer Strom oder eine elektrische Spannung an die Spule 3 angelegt, wobei von der Spule 3 ein magnetischer Fluss erzeugt wird. Durch den magnetischen Fluss wird eine elektromagnetische Anziehungskraft auf den Magnetanker 5 ausgeübt, durch welche der Magnetanker 5 in Betätigungsrichtung entgegen der Federkraft des Federelements 11 in Richtung der Spule 3 bewegt wird. Der mit dem Magnetanker 5 verbundene Ankerschaft 6 drückt dabei auf den Ventilschaft 7, wodurch das Ventilelement 8 aus der Schließstellung, in der die Ventilöffnung 9 verschlossen ist (links der Ventilachse A), in die Offenstellung, in der die Ventilöffnung 9 freigegeben ist (rechts der Ventilachse A) verlagert wird, wie durch den nach unten gerichteten Pfeil entlang der Ventilachse A in Fig.1 angedeutet ist. Der verfügbare Weg zwischen der Schließstellung und der Offenstellung wird auch als Ventilhub bezeichnet.

Sobald die Energieversorgung der Spule 3 unterbrochen wird oder ein hinreichend geringes Niveau erreicht, bei dem die Rückstellkraft des Federelements 11 (ggf. unterstützt durch eine auf die Unterseite des Ventilelements 8 wirkende Druckkraft im Brennraum) die magnetische Anziehungskraft der Spule 3 übersteigt, wird das Ventilelement 8 von der Offenstellung zurück in die Schließstellung verlagert, wie durch den nach oben gerichteten Pfeil entlang der Ventilachse A in Fig.1 angedeutet ist. Natürlich wäre bei entsprechender Ansteuerung der Spule 3 auch eine stufenlose Steuerung bzw. Regelung des Ventilhubs möglich, sodass auch Ventilstellungen zwischen der Schließstellung und der Offenstellung realisiert werden können. Beispielsweise wäre es vorstellbar, dass der Ventilhub stufenlos in Abhängigkeit der angelegten Spulenspannung oder des Spulenstroms steuer- oder regelbar ist. Dadurch könnte z.B. der Durchfluss des vorzugsweise gasförmigen Kraftstoffs an einen bestimmten vorgegebenen Verbrennungsprozess stufenlos angepasst werden.

Das Ventilelement 8 weist hier einen im Wesentlichen konischen Ventilteller 8a auf, der im in der Schließstellung dichtend an einem Ventilsitz des Ventilgehäuses 2 anliegt, wie links der Ventilachse A dargestellt ist. In der Offenstellung wird das Ventilelement 8 vom Ventilsitz in Betätigungsrichtung abgehoben und gibt einen bestimmten Querschnitt der Ventilöffnung 9 frei, wie rechts der Ventilachse A dargestellt ist. Dadurch kann ein vorzugsweise vorkomprimiertes Medium, wie z.B. ein gasförmiger Kraftstoff von einer hier seitlich am Ventilgehäuse 2 angeordneten Zuführöffnung 10 durch das Innere des Ventilgehäuses 2 zur Ventilöffnung 9 strömen, wie durch die Pfeile in Fig.1 angedeutet ist. Natürlich können auch mehrere Zuführöffnungen 10 vorgesehen sein. Das Medium kann der Zuführöffnung 10 beispielsweise von einem nicht dargestellten Speicher zugeführt werden. Über die Ventilöffnung 9 kann das Medium, z.B. der Kraftstoff beispielsweise einem Brennraum oder einer Vorkammer eines nicht dargestellten Verbrennungsmotors zugeführt werden.

Wie in Fig.1 dargestellt ist, verschließt das Ventilelement 8 die Ventilöffnung 9 des Ventilgehäuses 2 von außerhalb des Ventilgehäuses 2. Der Ventilsitz ist somit der Außenseite des Ventilgehäuses 2 zugewandt, sodass das Ventilelement 8 im geschlossenen Zustand am Ventilsitz anliegt. Der Ventilsitz muss auch nicht direkt am Ventilgehäuse 2 angeordnet sein, sondern könnte z.B. durch ein separates Ventilsitzelement ausgebildet sein, das am Ventilgehäuse 2 angeordnet ist. Dadurch können in vorteilhafter Weise verschiedene Werkstoffe für das Ventilgehäuse 2 und das Ventilsitzelement verwendet werden. Da der Ventilsitz aufgrund der Schließbewegung des Ventilelements 8 ein mechanisch relativ hoch belasteter Bereich ist, kann als Ventilsitzelement beispielsweise ein Ventilsitzring aus einem geeigneten verschleißarmen Werkstoff verwendet werden, wie z.B. aus einem gehärteten Stahl. Für das restliche Ventilsitzgehäuse 2 kann in diesem Fall vorzugsweise ein kostengünstigeres Material verwendet werden.

Das Federelement 11, welches das Ventilelement 8 im geschlossenen Zustand in Richtung des Ventilsitzes vorspannt, ist hier in Form einer Schraubenfeder ausgebildet, welche den Ventilschaft 7 ringförmig umgibt. Die Schraubenfeder ist in einem dafür vorgesehenen Raum im Ventilgehäuse 2 angeordnet, der auch vom gasförmigen Kraftstoff durchströmt wird. Am Ventilschaft 7 ist eine Schulter ausgebildet, an der eine Scheibe angeordnet ist. Die Schraubenfeder ist in axialer Richtung zwischen der Scheibe und einem Absatz im Ventilgehäuse angeordnet und übt eine Federkraft in axialer Richtung auf den Ventilschaft 7 aus, hier nach oben. Natürlich könnten auch andere geeignete Federelemente 11 verwendet werden wie z.B. Tellerfedern etc. und es wäre auch denkbar, dass das Federelement 11 eine nichtlineare Federkennlinie aufweist, um die Öffnungscharakteristik des Magnetventils zu beeinflussen, wie z.B. eine progressive oder degressive Federkennlinie. Natürlich ist die dargestellte Ausführung nur beispielhaft zu verstehen und es wären auch andere Ausführungen des Magnetventils 1 möglich.

Der Ventilschaft 7 und das Ventilelement 8 sind aus einem Werkstoff hergestellt, der für die zu erwartenden Temperaturen, Kräfte und Drücke geeignet ist, die im Betrieb des Magnetventils 1 auftreten. Wenn beispielsweise ein metallischer Werkstoff gewählt wird, sollte dieser zudem hinreichend korrosionsbeständig gegenüber dem Medium, z.B. einem gasförmigen Kraftstoff sein, für den das Magnetventil 1 bestimmungsgemäß vorgesehen ist.

Wenn die elektrische Spule 3 mit Energie versorgt wird, wird ein magnetischer Fluss erzeugt, der einen magnetischen Kreis M ausbildet. Der magnetische Kreis M wird über das Ventilgehäuse 2 und den Magnetanker 5 geschlossen, wie in Fig.1 angedeutet ist. Dadurch wirkt eine magnetische Kraft auf den Magnetanker 5, durch welche der Magnetanker 5 axial in Richtung der Spule 3 angezogen wird, wodurch das Ventilelement 8 geöffnet (oder umgekehrt geschlossen) wird.

Der magnetische Fluss des magnetischen Kreises M verläuft hier radial innerhalb der Spule 3 in einer im Wesentlichen axialen Richtung durch einen ersten Ventilgehäuseabschnitt 2a, axial unterhalb der Spule 3 über einen an den ersten Ventilgehäuseabschnitt 2a anschießenden, radial nach außen verlaufenden zweiten Ventilgehäuseabschnitt 2b. Vom zweiten Ventilgehäuseabschnitt 6b verläuft der magnetische Fluss über einen daran anschließenden radial außenliegenden dritten Ventilgehäuseabschnitt 6c, der zugleich die Ventilgehäuseaußenwand des Ventilgehäuses 2 ausbildet. Der magnetische Kreis M wird schließlich über den beweglichen Magnetanker 5 geschlossen, der im gezeigten Beispiel in axialer Richtung oberhalb der Spule 3 angeordnet ist. Die Spule 3 inkl. Spulenträger 4 sitzt also hier in einer ringförmigen Ausnehmung, die in radialer Richtung zwischen dem ersten und dritten Ventilgehäuseabschnitt 6a, 6c ausgebildet ist.

Das Ventilgehäuse 2 ist zumindest im Bereich um die Spule 3, in dem sich der magnetische Kreis M ausbildet aus einem magnetisch leitfähigen Material ausgeführt wie z.B. einem ferromagnetischen Metall. Vorzugsweise ist jedoch das gesamte Ventilgehäuse 2 aus dem gleichen ferromagnetischen Werkstoff ausgeführt, was die Fertigung des Ventilgehäuses 2 erleichtert. In analoger Weise ist auch der Magnetanker 5 zumindest im Bereich des magnetischen Kreises 5 aus einem magnetisch leitfähigen Werkstoff ausgeführt, um den magnetischen Kreis 5 zu schließen. Vorzugsweise ist aber der gesamte Magnetanker 5 aus dem gleichen Werkstoff hergestellt, was die Fertigung vereinfacht.

Der Ankerschaft 6 ist aber vorzugsweise zumindest im Bereich des magnetischen Kreises 5 nicht magnetisch leitfähig, um keine störenden lateralen magnetischen Kräfte auf den Ankerschaft 6 zu erzeugen, welche sich beispielsweise wegen einer erhöhten Reibung unter Umständen negativ auf die Betätigungskraft des Ventilelements 8 auswirken könnte. Das Magnetventil 1 ist hier als sogenanntes trockenlaufendes Ventil ausgeführt. Das bedeutet, dass kein separater Schmierstoff zur Schmierung der beweglichen Teile des Magnetventils 1 vorgesehen ist. Insbesondere wenn relativ trockene Gase als Kraftstoff verwendet werden ist es bei solchen trockenlaufenden Ventilen vorteilhaft, dass die Reibung zwischen Ankerschaft 6 und dem Abschnitt des Ventilgehäuses 2, in dem der Ankerschaft 6 geführt ist (hier erster Gehäuseabschnitt 6a) möglichst minimiert wird. Um dies zu erreichen ist es deshalb speziell bei trockenlaufenden Ventilen vorteilhaft, wenn keine oder möglichst geringe laterale Kräfte auf den Magnetanker 5 und auf den Ankerschaft 6 wirken, um die Reibung in der Führung des Ankerschaftes 6 zu verringern.

Vorzugsweise ist im Ventilgehäuse 2 daher zumindest ein magnetisch leitfähiges Flusselement 12 angeordnet, um zumindest einen Teil des über die magnetisch leitfähige Ventilgehäuseaußenwand, hier dem dritten Gehäuseabschnitt 2c, fließenden magnetischen Flusses des magnetischen Kreises M in die der Spule 3 zugewandte zweite Ankerstirnfläche 5B des Magnetankers 5 zu leiten (oder umgekehrt, je nach Richtung des magnetischen Flusses). Vorzugsweise werden zumindest 80%, besonders bevorzugt zumindest 90%, insbesondere 100% des magnetischen Flusses über das Flusselement 12 in den Magnetanker 5 geleitet. Das Flusselement 12 ist hier in radialer Richtung, also quer zur Betätigungsrichtung, in einem an die Ventilgehäuseaußenwand 2c des Ventilgehäuses 2 angrenzenden Bereich angeordnet. Das Flusselement 12 erstreckt sich im Ventilgehäuse 2 von der Ventilgehäuseaußenwand 2c aus in radialer Richtung nach innen. In Betätigungsrichtung ist das Flusselement 12 zwischen der Spule 3 und dem Magnetanker 5 angeordnet.

Durch die Verwendung des Flusselements 12 kann ein größerer Anteil des magnetischen Flusses in axialer Richtung in den Magnetanker 5 fließen bzw. der Anteil des magnetischen Flusses, der von der Ventilgehäuseaußenwand 2c in radialer Richtung in den Magnetanker 5 fließt wird verringert. Dadurch können auf den Magnetanker 5 wirkende Seitenkräfte reduziert werden, wodurch Reibungskräfte zwischen dem Ankerschaft 6 und dem Ventilgehäuse 2 reduziert werden können. Durch diese Verringerung der Reibungsverluste kann in weiterer Folge die Betätigungsgeschwindigkeit des Ventilelements 8 erhöht werden, sodass sehr dynamische Öffnungs- und Schließvorgänge realisiert werden können. Besonders vorteilhaft ist es dabei, wenn das Flusselement 12 eine höhere magnetische Leitfähigkeit aufweist, als die Ventilgehäuseaußenwand 2c. Dadurch kann der magnetische Widerstand des bevorzugten magnetischen Kreises reduziert werden und folglich der Anteil des magnetischen Flusses, der über das Flusselement 12 in die Ankerstirnfläche 5B fließt kann erhöht werden.

Die Anordnung des Flusselements 12 kann in vorteilhafter Weise auch dazu genutzt werden, die radiale Erstreckung des Magnetventils 1, hier z.B. hier den Durchmesser des Ventilgehäuses 2, bei im Wesentlichen gleichbleibender Betätigungskraft des Ventilelements 8 zu verringern, da der Magnetanker 5 in radialer Richtung kleiner ausgeführt werden kann. Alternativ könnte auch die Betätigungskraft des Ventilelements 8 bei gleicher Baugröße des Magnetventils 1 erhöht werden. Gleichzeitig wird auch die Effizienz der Krafterzeugung erhöht, sodass ggf. eine kleiner dimensionierte Spule 3 verwendet werden kann. Vorzugsweise ist das Flusselement 12, so, wie im dargestellten Beispiel, als vorzugsweise geschlossener Flussring ausgeführt, der in radialer Richtung zwischen einem Endabschnitt 4a des Spulenträgers 4 und Ventilgehäuseaußenwand 2c angeordnet ist. In axialer Richtung ist der Flussring 12 zwischen der Spule 3 und dem Magnetanker 5 angeordnet. Das Flusselement 12 ist vorzugsweise aus einem Material mit guter magnetischer Leitfähigkeit, z.B. aus dem gleichen Werkstoff wie der Magnetanker 5 und/oder das Ventilgehäuse 2 bzw. der magnetisch leitfähige Abschnitt des Ventilgehäuses 2.

Gemäß einer vorteilhaften Ausgestaltung ist ein dem Magnetanker 5 axial zugewandter Endabschnitt 4a des Spulenträgers 4 als Endanschlag für den Magnetanker 5 ausgebildet. Dadurch kann die axiale Bewegung des Magnetankers 5 begrenzt werden, um damit den Ventilhub des Ventilelements 8 zu begrenzen. Im dargestellten Beispiel ist das Flusselement 12 in radialer Richtung zwischen dem Endabschnitt 4a des Spulenträgers 4 und der Ventilgehäuseaußenwand 2c angeordnet. Das Flusselement 12 ist hier im Wesentlich bündig mit einer Stufe auf der Innenseite der Ventilgehäuseaußenwand 2c angeordnet und bündig mit einer, dem Magnetanker 5 zugewandten axialen Endfläche des ersten Gehäuseabschnitts 2a angeordnet. Der Endabschnitt 4a des Spulenträgers 4 überragt die Endfläche um eine bestimmte Länge I, wie in Fig.1 dargestellt ist.

Durch die konstruktive Ausgestaltung des Spulenträgers 4 inkl. Endabschnitt 4a kann diese Länge I vorgegeben werden, sodass der Ventilhub in einfacher Weise begrenzt werden kann, ohne dass separate Bauteile benötigt werden. Der gesamte Spulenträger 4 oder zumindest der Endabschnitt 4a könnte dabei z.B. aus einem geeigneten Werkstoff mit gewissen Federungs- und/oder Dämpfungseigenschaften ausgeführt sein. Dadurch können das Geräusch und die mechanische Belastung des Magnetankers 5 und des Endabschnitts 4a beim Auftreffen des Magnetankers 5 auf den Endabschnitt 4a reduziert werden. Dies ist vorteilhaft, um die Geräuschemission zu reduzieren und um die Lebensdauer zu erhöhen.

Wenn das Ventilelement 8 nach Betätigung des Magnetventils 1 aus der Offenstellung wieder in die Schließstellung zurückkehrt, schlägt das Ventilelement 8 bedingt durch die Rückstellkraft des Federelements 11 in der Regel am Ventilsitz an. Das kann einerseits zu einer unerwünschten Geräuschentwicklung führen und andererseits einer erhöhten mechanischen Beanspruchung sowohl des Ventilelements 8, als auch des Ventilsitzes, was zu einem erhöhten Verschleiß am Ventilelement 8 und/oder am Ventilsitz führen kann. Dies kann insbesondere bei Federelementen 11 mit großen Rückstellkräften, welche für hohe Schließgeschwindigkeiten vorteilhaft sind, der Fall sein.

Um dies zu verhindern, ist gemäß einer weiteren vorteilhaften Ausgestaltung des Magnetventils 1 eine pneumatische Dämpfung im Magnetventil 1 vorgesehen. Das Ventilgehäuse 2 bildet dazu im Bereich des Magnetankers 5 einen Zylinder aus und der Magnetanker 5 bildet einen Kolben aus, der im Zylinder axial beweglich ist. In Betätigungsrichtung zwischen der, der Spule 3 abgewandten ersten Ankerstirnfläche 5A des Magnetankers 5 und einer gegenüberliegenden Ventilgehäusewand 2d des Ventilgehäuses 2 ist ein Kompressionsraum KR ausgebildet. Im Magnetanker 5 ist zudem zumindest eine Drosselöffnung 13 angeordnet, welche die erste Ankerstirnfläche 5A mit einer gegenüberliegenden zweiten Ankerstirnfläche 5B verbindet.

An der Umfangsfläche 5U des Magnetankers 5 ist zudem vorzugsweise ein geeignetes Dichtelement zur Abdichtung des Kompressionsraums KR angeordnet, beispielsweise in Form eines bekannten Kolbendichtrings oder O-Rings. Vorzugsweise ist im Ventilgehäuse 2, so wie in Fig.1 dargestellt auch eine Entlastungsöffnung, insbesondere eine Entlastungsbohrung vorgesehen, die den Raum unterhalb des Magnetankers 5 mit dem Raum verbindet, in dem das Federelement 11 angeordnet ist. Dadurch wird eine Druckentlastung des Raums unterhalb des Magnetankers 5 realisiert, um zu vermeiden, dass auch bei der Öffnung des Magnetventils 1 die Bewegung des Magnetankers 5 gedämpft wird. Für eine gute Druckentlastungswirkung ist die Entlastungsbohrung vorzugsweise so angeordnet, dass sie mit der Drosselöffnung 13 fluchtet.

Damit wird eine einfache und effektive Dämpfung des Magnetankers 5 beim Schließen des Magnetventils 1 realisiert, wobei die Dämpfungscharakteristik durch die konstruktive Ausgestaltung des Magnetventils 1 beeinflusst werden kann, insbesondere durch die Größe der ersten Ankerstirnfläche 5A, durch das Volumen des Kompressionsraums KR, die Wirksamkeit der Abdichtung des Magnetankers 5 im Zylinder und die Anzahl, den Verlauf und Querschnitt der Drosselöffnung/en 13. Durch die pneumatische Dämpfung kann die Geschwindigkeit, mit der das Ventilelement 8 gegen den Ventilsitz anschlägt auf vorzugsweise maximal 0,5 m/s reduziert werden, sodass das Geräusch und der Verschließ verringert werden können. Vorzugsweise wird die Dämpfungscharakteristik so gewählt, dass am Beginn der Schließbewegung eine im Wesentlichen ungedämpfte Bewegung erfolgt und dass die Dämpfung erst kurz vor der Schließstellung eintritt. Dadurch kann das Magnetventil 1 rasch geschlossen werden und trotzdem ein möglichst sanftes Anlegen an den Ventilsitz erreicht werden. Ein rasches Öffnen und Schließen des Magnetventils 1 ist vorteilhaft, um eine möglichst genaue Mengenregelung des vorzugsweise gasförmigen Mediums zu erreichen und um mehrere sequentielle Öffnungs- und Schließvorgänge in kurzer Zeit durchführen zu können.

Wie eingangs erwähnt, waren der Ankerschaft 6 und der Ventilschaft 7 bisher oftmals starr miteinander verbunden, beispielsweise einstückig ausgeführt oder verschweißt. Insbesondere bei relativ großen Magnetventilen 1, wie sie z.B. bei Großmotoren zur Anwendung kommen, weisen die bewegten Bauteile des Magnetventils 1, insbesondere der Magnetanker 5, der Ankerschaft 6, der Ventilschaft 7 und das Ventilelement 8 vergleichsweise große Massen auf, welche bei Betätigung des Magnetventils 1 nicht vernachlässigbare Trägheitskräfte verursachen. Insbesondere bedingt durch die Masse des Magnetankers 5 und des Ankerschaftes 6 kann daher beim Schließen des Magnetventils 1 eine Trägheitskraft auftreten, die über den Ventilschaft 7 auf das Ventilelement 8 wirkt. Im dargestellten Beispiel wirkt beim Anschlagen des Ventilelements 8 am Ventilsitz in der Schließstellung bedingt durch diese Trägkeitskraft eine zusätzliche Zugkraft nach oben, welche sich negativ auf die Geräuschentwicklung und auf den Verschleiß des Ventilelements und/oder des Ventilsitzes auswirken kann.

Erfindungsgemäß ist deshalb vorgesehen, dass der Ankerschaft 6 und der Ventilschaft 7 voneinander getrennt ausgebildet sind, wobei zwischen dem Ankerschaft 6 und dem Ventilschaft 7 ein Pufferelement 15 aus Kunststoff angeordnet ist. Durch die getrennte Ausführung kann die Bewegung des Magnetankers 5 inkl. Ankerschaft 6 von der Bewegung des Ventilelements 8 inkl. Ventilschaft 7 in der Schließbewegung entkoppelt werden, wenn das Ventilelement 8 am Ventilsitz anliegt. Dadurch kann die Belastung auf das Ventilelement 8 und den Ventilsitz verringert werden, weil beim Schließen des Magnetventils 1 nur noch die Trägheitskraft der Massen des Ventilelements 8 und des Ventilschaftes 7 auf das Ventilelement 8 und den Ventilsitz wirken. Durch die Anordnung des Pufferelements 15 wird zudem ein direkter, insbesondere metallischer Kontakt zwischen Ankerschaft 6 und Ventilschaft 7 verhindert, sodass dadurch die Geräuschentwicklung und auch der Verschleiß an der Kontaktfläche minimiert werden können.

Das Pufferelement 15 ist vorzugsweise aus einem tribologisch optimierten Kunststoff ausgebildet, wie z.B. ein mit Polytetrafluorethylen (PTFE) gefüllter Kunststoff, sodass eine möglichst geringe Reibung zwischen der Umfangsfläche des Pufferelements 15 und dem Ventilgehäuse 2 auftritt. Insbesondere bei trockenlaufenden Ventilen ohne zusätzlichen Schmierstoff ist dies vorteilhaft, weil dadurch die Effizient des Magnetventils 1 weiter verbessert und/oder die Betätigungskraft erhöht werden kann. Wenn der Endabschnitt 4a des Spulenträgers 4, so wie dargestellt, als Endanschlag für den Magnetanker 5 verwendet wird, kann das Pufferelement 15 zudem in vorteilhafter Weise dazu ausgebildet sein, allfällige temperaturabhängige Veränderungen des Ventilhubs zu kompensieren. Dazu wird für das Pufferelement 15 ein geeigneter Werkstoff verwendet und das Pufferelement 15 wird so dimensioniert, dass der (maximale) Ventilhub beim Anliegen des Magnetankers 5 am Endanschlag des Spulenträgers 4 über der Temperatur möglichst konstant ist. Dabei ist es ausreichend, wenn die Kompensation zumindest in einem für die Anwendung des Magnetventils 1 zu erwartenden Temperaturbereich realisiert wird.

Abschließend sei erwähnt, dass das dargestellte Magnetventil 1 natürlich nur beispielhaft zu verstehen ist und vereinfacht dargestellt ist, um den grundlegenden Aufbau und die Funktionsweise zu veranschaulichen. Die konkrete konstruktive Ausführung, wie z.B. Dimensionierung, Werkstoffwahl, Ausführung des Ventilelements 8, etc. obliegt natürlich dem Fachmann und hängt vom Einsatzgebiet des Magnetventils 1 ab.

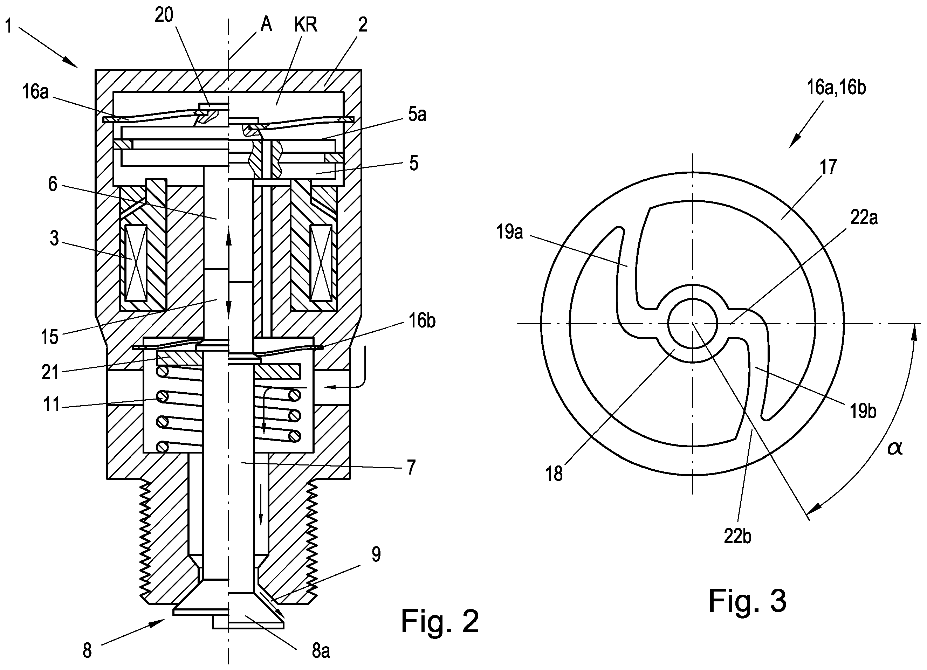

In Fig.2 ist eine weitere bevorzugte Ausführungsform des Magnetventils 1 dargestellt. Das Magnetventil 1 entspricht im Wesentlichen der Ausführungsform von Fig.1, weshalb hier nur auf die wesentlichen Unterschiede eingegangen wird. Im Ventilgehäuse 2 des dargestellten Magnetventils 1 sind hier zusätzlich ein Lenkerelement 16a zur Führung des Magnetankers 5 und ein Lenkerelement 16b zur Führung des Ventilelements 8 vorgesehen. Das Lenkerelement 16a zur Führung des Magnetankers 5 kann beispielsweise an einer der Spule 3 abgewandten Seite des Magnetankers 5 zwischen dem Magnetanker 5 und der gegenüberliegenden Ventilgehäusewand 2d im Ventilgehäuse 2 angeordnet sein, beispielsweise im Kompressionsraum KR, wenn eine pneumatische Dämpfung vorgesehen ist. Durch diese Anordnung ergibt sich eine gute Führung des Magnetankers 5 und es kann der verfügbare Freiraum innerhalb des Ventilgehäuses 2 ausgenutzt werden. Grundsätzlich wäre aber natürlich auch eine Anordnung des Lenkerelements 16a an einer anderen Stelle denkbar.

Die beiden Lenkerelemente 16a, 16b sind hier als Federscheiben ausgebildet, die z.B. aus einem geeigneten Federstahl ausgebildet sein können. Jede Federscheibe ist an ihrem Umfang am Ventilgehäuse 2 befestigt und weist einen zentralen Führungsabschnitt 18 zur Führung des Magnetankers 5 oder des Ventilelements 8 auf. Die Federscheiben 16a, 16b können gleichartig ausgeführt sein und sich beispielsweise nur in ihrer Größe, insbesondere ihrem Durchmesser unterscheiden. Die Federscheiben 16a, 16b sind am Umfang fest, also in axialer Richtung unbeweglich, am Ventilgehäuse 2 eingespannt, wobei der zentrale Führungsabschnitt 18 in axialer Richtung gesehen beweglich ist.

Im dargestellten Beispiel ist an der, der Spule 3 gegenüberliegenden Seite des Magnetankers 5, insbesondere an der ersten Ankerstirnfläche 5a, ein zentraler Führungsvorsprung 20 vorgesehen. Der zentrale Führungsabschnitt 18 des Lenkerelements 16a bzw. der Federscheibe ist in geeigneter Weise am Führungsvorsprung 20 befestigt, beispielsweise verschraubt. Der zentrale Führungsabschnitt 18 des Lenkerelements 16b bzw. der Federscheibe ist in geeigneter Weise mit am Ventilelement 8 befestigt, beispielsweise verschraubt. Im dargestellten Beispiel ist der zentrale Führungsabschnitt 18 des Lenkerelements 16b beispielswiese an einem, dem Ventilteller 8a gegenüberliegenden Ende des Ventilschafts 7 befestigt, das hier zwischen dem Pufferelement 15 und einem Federteller 21 des Federelements 11 liegt.

In Fig.3 ist eine vorteilhafte Ausgestaltung eines als Federscheibe ausgebildeten Lenkerelements 16a, 16b in einer Draufsicht dargestellt. Die Federscheibe weist einen, die Federscheibe in radialer Richtung begrenzenden, ringförmigen, insbesondere kreisringförmigen, Befestigungsabschnitt 17 zur Befestigung der Federscheibe am Ventilgehäuse 2 auf. Der zentrale Führungsabschnitt 18 ist hier mit zwei Verbindungsstegen 19a, 19b mit dem ringförmigen Befestigungsabschnitt 17 verbunden. Es könnten aber natürlich auch mehr Verbindungsstege 19i vorgesehen sein, beispielsweise drei oder vier. Die Verbindungsstege 19a, 19b sind dabei vorzugsweise in radialer Richtung gegenüberlegend angeordnet, wie in Fig.3 ersichtlich ist.

Der zentrale Führungsabschnitt 18 ist in axialer Richtung relativ zum ringförmigen Befestigungsabschnitt 17 beweglich, sodass er der Öffnungs- und Schließbewegung des Magnetankers 5 oder des Ventilelements 8 folgen kann. Dies ist in Fig.2 ersichtlich, in welcher das Magnetventil 1 links der Ventilachse A im geschlossenen Zustand dargestellt ist und rechts der Ventilachse A im geöffneten Zustand. In radialer Richtung wird der zentrale Führungsabschnitt 18 durch die Verbindungsstege 19a, 19b gehalten, sodass der Magnetanker 5 oder das Ventilelement 8 geführt und damit stabilisiert werden. Die Verbindungsstege 19a, 19b sind dabei vorzugsweise möglichst biegeweich, sodass in axialer Richtung ein möglichst geringer Widerstand auf den Magnetanker 5 oder das Ventilelement 8 ausgeübt wird. In radialer Richtung gesehen sind die Verbindungsstege 19a, 19b hinreichend steif, sodass eine stabile Führung des Magnetankers 5 oder des Ventilelements 8 erreicht wird.

In der in Fig.3 dargestellten vorteilhaften Ausführungsform der Federscheibe ist jeder Verbindungssteg 19a, 19b an einem ersten Verbindungspunkt 22a mit dem zentralen Führungsabschnitt 18 verbunden und an einem zweiten Verbindungspunkt 22b mit dem ringförmigen Befestigungsabschnitt 18 verbunden. Der erste Verbindungspunkt 22a eines Verbindungstegs 19a, 19b ist dabei in Umfangsrichtung gesehen vom zweiten Verbindungspunkt 22b des Verbindungsstegs 19a, 19b beabstandet angeordnet. Der erste und zweite Verbindungspunkt 22a, 22b können beispielsweise in einem Winkel a von zumindest 30° in Umfangsrichtung beabstandet sein. Natürlich ist die dargestellte Federscheibe nur beispielhaft zu verstehen, insbesondere die Anzahl der Verbindungsstege 19i und die konstruktive Ausführung, z.B. die Breite und der radiale Verlauf der Verbindungsstege 19i können an eine gewünschte Führungs-Charakteristik angepasst werden.

## Patentansprüche

1. Magnetventil (1) mit einem Ventilgehäuse (2), in dem eine elektrische Spule (3) und ein Magnetanker (5) angeordnet sind und mit einem vom Magnetanker (5) in einer axialen Betätigungsrichtung betätigbaren Ventilelement (8) zum Öffnen und Schließen des Magnetventils (1), wobei am Ventilgehäuse (2) eine Ventilöffnung (9) vorgesehen ist und wobei das Ventilelement (8) die Ventilöffnung (9) von außerhalb des Ventilgehäuses (2) verschließt, wobei der Magnetanker (5) einen Ankerschaft (6) aufweist und das Ventilelement (8) einen vom Ankerschaft getrennten Ventilschaft (7) aufweist, wobei bei Betätigung des Magnetventils (1) der Magnetanker (5) über den Ankerschaft (6) den Ventilschaft (7) des Ventilelements (8) betätigt, um die Ventilöffnung (9) freizugeben und wobei beim Schließen des Magnetventils (1) eine Bewegung des Magnetankers (5) von einer Bewegung des Ventilelements (8) entkoppelt ist, wobei das Ventilgehäuse (2) im Bereich des Magnetankers (5) einen Zylinder ausbildet und dass der Magnetanker (5) einen Kolben ausbildet, der im Zylinder axial beweglich ist, wobei in Betätigungsrichtung zwischen einer, der Spule (3) abgewandten ersten Ankerstirnfläche (5A) des Magnetankers (5) und einer gegenüberliegenden Ventilgehäusewand (2d) ein Kompressionsraum (KR) ausgebildet ist, wobei im Magnetanker (5) zumindest eine Drosselöffnung (13) angeordnet ist, welche die erste Ankerstirnfläche (5A) mit einer gegenüberliegenden zweiten Ankerstirnfläche (5B) verbindet, **dadurch gekennzeichnet, dass** zwischen Ankerschaft (6) und Ventilschaft (7) ein Pufferelement (15) aus Kunststoff angeordnet ist.

2. Magnetventil (1) nach Anspruch 1, **dadurch gekennzeichnet, dass** das Pufferelement (15) aus einem tribologisch optimierten Kunststoff ausgebildet ist, vorzugsweise aus einem Polytetrafluorethylen enthaltenden Kunststoff.

3. Magnetventil (1) nach Anspruch 1 oder 2, **dadurch gekennzeichnet, dass** an der Umfangsfläche (5U) des Magnetankers (5) ein Dichtelement (14) zur Abdichtung des Kompressionsraums (KR) angeordnet ist.

4. Magnetventil (1) nach einem der Ansprüche 1 bis 3, **dadurch gekennzeichnet, dass** eine Ventilöffnung (9) an einem axialen Ende (E1) des Ventilgehäuses (2) vorgesehen ist und dass am Ventilgehäuse (2) zumindest eine Zuführöffnung (10) für ein vorzugsweise gasförmiges Medium vorgesehen ist, die innerhalb des Ventilgehäuses (2) mit der Ventilöffnung (9) verbunden ist.

5. Magnetventil (1) nach einem der Ansprüche 1 bis 4, **dadurch gekennzeichnet, dass** im Ventilgehäuse (2) ein Federelement (11) angeordnet ist, das eine Rückstellkraft auf das Ventilelement (8) ausübt, um das Ventilelement (8) im unbetätigten Zustand des Magnetventils (1) in der Schließstellung zu halten.

6. Verbrennungsmotor mit einem Zylinderkopf und mit zumindest einem Brennraum, wobei am Zylinderkopf zumindest ein Magnetventil (1) nach einem der Ansprüche 1 bis 5 angeordnet ist, um dem Brennraum oder einer, dem Brennraum vorgelagerten Vorkammer einen vorzugsweise gasförmigen Kraftstoff zuzuführen.

## Claims

1. Solenoid valve (1) comprising a valve housing (2) in which an electric coil (3) and a magnet armature (5) are arranged, and comprising a valve element (8) for opening and closing the solenoid valve (1), which valve element can be actuated by the magnet armature (5) in an axial actuating direction, wherein a valve opening (9) is provided in the valve housing (2), and wherein the valve element (8) closes the valve opening (9) from outside the valve housing (2), wherein the magnet armature (5) has an armature shaft (6) and the valve element (8) has a valve shaft (7) which is separate from the armature shaft, wherein, upon actuation of the solenoid valve (1), the magnet armature (5) actuates the valve shaft (7) of the valve element (8) via the armature shaft (6) in order to release the valve opening (9), and wherein, upon closing of the solenoid valve (1), a movement of the magnet armature (5) is uncoupled from a movement of the valve element (8), wherein the valve housing (2) forms a cylinder in the region of the magnet armature (5), and the magnet armature (5) forms a piston which is axially movable in the cylinder, wherein, in the actuating direction, a compression chamber (KR) is formed between a first armature end face (5A) of the magnet armature (5), which faces away from the coil (3), and an opposite valve housing wall (2d), wherein at least one throttle opening (13) is arranged in the magnet armature (5), which connects the first armature end face (5A) to an opposite second armature end face **(5B),characterized in that** a buffer element (15) made of plastics material is arranged between the armature shaft (6) and the valve shaft (7).

2. Solenoid valve (1) according to claim 1, **characterized in that** the buffer element (15) is formed from a tribologically-optimized plastics material, preferably from a plastics material that contains polytetrafluoroethylene.

3. Solenoid valve (1) according to claim 1 or claim 2, **characterized in that** a sealing element (14) for sealing the compression chamber (KR) is arranged on the circumferential surface (5U) of the magnet armature (5).

4. Solenoid valve (1) according to any of claims 1 to 3,
**characterized in that** a valve opening (9) is provided in an axial end (E1) of the valve housing (2), **and in that** at least one feed opening (10) for a preferably gaseous medium is provided in the valve housing (2) and is connected within the valve housing (2) to the valve opening (9).

5. Solenoid valve (1) according to any of claims 1 to 4, **characterized in that** a spring element (11) is arranged in the valve housing (2) and exerts a restoring force on the valve element (8) in order to hold the valve element (8) in the closed position when the solenoid valve (1) is in the non-actuated state.

6. Internal combustion engine comprising a cylinder head and at least one combustion chamber, wherein at least one solenoid valve (1) according to any of claims 1 to 5 is arranged on the cylinder head in order to feed a preferably gaseous fuel to the combustion chamber or to a prechamber upstream of the combustion chamber.

## Revendications

1. Électrovanne (1) comportant un boîtier de vanne (2) dans lequel sont disposées une bobine électrique (3) et une armature magnétique (5) et comportant un élément de vanne (8) pouvant être actionné par l'armature magnétique (5) dans un sens d'actionnement axial pour l'ouverture et la fermeture de l'électrovanne (1), dans laquelle une ouverture de vanne (9) est prévue sur le boîtier de vanne (2) et dans laquelle l'élément de vanne (8) ferme l'ouverture de vanne (9) depuis l'extérieur du boîtier de vanne (2), dans laquelle l'armature magnétique (5) présente une tige d'armature (6) et l'élément de vanne (8) présente une tige de vanne (7) séparée de la tige d'armature, dans laquelle l'armature magnétique (5) actionne la tige de vanne (7) de l'élément de vanne (8) par l'intermédiaire de la tige d'armature (6) lors de l'actionnement de l'électrovanne (1), pour libérer l'ouverture de vanne (9) et dans laquelle, lors de la fermeture de l'électrovanne (1), un mouvement de l'armature magnétique (5) est découplé d'un mouvement de l'élément de vanne (8), dans laquelle le boîtier de vanne (2) conçoit un cylindre dans la zone de l'armature magnétique (5) et l'armature magnétique (5) conçoit un piston qui est mobile axialement dans le cylindre, dans laquelle une chambre de compression (KR) est conçue dans le sens d'actionnement entre une première surface frontale d'armature (5A) de l'armature magnétique (5), opposée à la bobine (3), et une paroi opposée (2d) de boîtier de vanne, dans laquelle au moins une ouverture d'étranglement (13) est disposée dans l'armature magnétique (5), laquelle ouverture relie la première surface frontale d'armature (5A) à une seconde surface frontale d'armature (5B) opposée, **caractérisée en ce qu'**un élément amortisseur (15) en plastique est disposé entre la tige d'armature (6) et la tige de vanne (7).

2. Électrovanne (1) selon la revendication 1, **caractérisée en ce que** l'élément amortisseur (15) est conçu en une matière plastique optimisée en termes de tribologie, de préférence en une matière plastique contenant du polytétrafluoroéthylène.

3. Électrovanne (1) selon la revendication 1 ou 2, **caractérisée en ce qu'**un élément d'étanchéité (14) permettant d'assurer l'étanchéité de la chambre de compression (KR) est disposé sur la surface périphérique (5U) de l'armature magnétique (5).

4. Électrovanne (1) selon l'une des revendications 1 à 3,
**caractérisée en ce qu'**une ouverture de vanne (9) est prévue à une extrémité axiale (E1) du boîtier de vanne (2) et **en ce qu'**au moins une ouverture d'alimentation (10) pour du carburant de préférence gazeux est prévue sur le boîtier de vanne (2), laquelle est reliée à l'ouverture de vanne (9) à l'intérieur du boîtier de vanne (2).

5. Électrovanne (1) selon l'une des revendications 1 à 4,
**caractérisée en ce qu'**un élément formant ressort (11) est disposé dans le boîtier de vanne (2), lequel exerce une force de rappel sur l'élément de vanne (8) afin de maintenir l'élément de vanne (8) dans la position de fermeture lorsque l'électrovanne (1) n'est pas actionnée.

6. Moteur à combustion interne comportant une culasse de cylindre et comportant au moins une chambre de combustion, dans lequel au moins une électrovanne (1) selon l'une des revendications 1 à 5 est disposée sur la culasse de cylindre pour alimenter en carburant, de préférence gazeux, la chambre de combustion ou une préchambre située en amont de la chambre de combustion.
